Europäisches Patentamt

European Patent Office

Office européen des brevets

(11) Numéro de publication: **0 094 878**
**A2**

(12) **DEMANDE DE BREVET EUROPEEN**

(21) Numéro de dépôt: 83400959.9

(22) Date de dépôt: 11.05.83

(51) Int. Cl.³: **G 03 B 21/00**

(30) Priorité: 17.05.82 FR 8208567

(43) Date de publication de la demande:
23.11.83 Bulletin 83/47

(84) Etats contractants désignés:
AT BE CH DE FR GB IT LI LU NL SE

(71) Demandeur: PRESTINOX S.A. Société Anonyme dite:
31 à 35 Route de Tremblay Boite Postale No 5
F-93420 Villepinte(FR)

(72) Inventeur: Cochard, Pierre
2, Route de Paris
F-89320 Cerisiers(FR)

(74) Mandataire: Bruder, Michel
10 rue de la Pépinière
F-75008 Paris(FR)

(54) Visionneuse pour diapositives.

(57) La présente invention concerne une visionneuse pour diapositives.

Cette visionneuse est caractérisée en ce qu'elle comprend un ensemble monobloc (1) destiné à être monté devant l'emplacement de l'objectif d'un projecteur de diapositives (7) ou à cet emplacement même, dans l'axe optique (xx') du projecteur, cet ensemble comprenant un tube (2) d'entrée du faisceau lumineux dans lequel est logée, à proximité de l'orifice d'entrée du faisceau, une lentille (3), un miroir (5) incliné par rapport à l'axe (xx') du tube (2) d'entrée du faisceau lumineux et un écran (6) disposé latéralement et recevant le faisceau lumineux dévié par le miroir (5), pour permettre l'observation sur cet écran d'une diapositive (8) placée dans le projecteur (7) et éclairée par la lampe (9) de celui-ci.

Fig. 1

EP 0 094 878 A2

La présente invention concerne une visionneuse pour diapositives.

On connaît déjà divers types de visionneuses qui sont constituées par des appareils autonomes comportant une lampe pour éclairer une diapositive, cette lampe étant alimentée par une batterie incorporée ou bien encore à partir du secteur. Cette lampe éclaire la diapositive et l'image est projetée sur un verre grossissant.

Une telle visionneuse présente l'inconvénient d'exiger une mise en place individuelle des diapositives, c'est-à-dire les unes après les autres.

Par ailleurs on utilise couramment des projecteurs de diapositives afin de projeter celles-ci à distance sur un écran, avec un agrandissement approprié. De tels projecteurs sont pourvus d'un système passe-vues permettant de faire défiler toutes les diapositives d'une série, derrière un objectif, et de les projeter les unes après les autres sur l'écran. Un tel projecteur présente l'inconvénient d'exiger, pour l'observation des diapositives, la présence d'un écran qui est relativement encombrant et qui doit être manipulé à chaque observation.

La présente invention a pour but de remédier aux inconvénients des appareils connus jusqu'à ce jour en procurant une visionneuse de conception particulièrement simple permettant d'observer très aisément toute une série de diapositives, les unes après les autres.

A cet effet, cette visionneuse pour diapositives est caractérisée en ce qu'elle comprend un ensemble monobloc destiné à être monté devant l'emplacement de l'objectif d'un projecteur de diapositives ou à cet emplacement même, dans l'axe optique du projecteur, cet ensemble comprenant un tube d'entrée du faisceau lumineux dans lequel est logée , à proximité de l'orifice d'entrée du faisceau, une lentille, un miroir incliné par rapport à l'axe du tube d'entrée du faisceau lumineux et un écran disposé latéralement et recevant le faisceau lumineux dévié par le miroir, pour permettre l'observation sur cet écran d'une diapositive placée dans le projecteur et éclairée par la lampe de celui-ci.

On décrira ci-après, à titre d'exemple non limitatif, une forme d'exécution de la présente invention, en référence au dessin annexé sur lequel :

- la figure 1 est une vue en coupe axiale de la visionneuse suivant l'invention ;

- les figures 2,3 et 4 sont des vues en perspective de la visionneuse illustrant respectivement des positions verticale, inclinée et horizontale de l'écran de visualisation.

- la figure 5 est une vue en élévation partielle de la visionneuse montée à l'avant d'un projecteur, à la place de l'objectif.

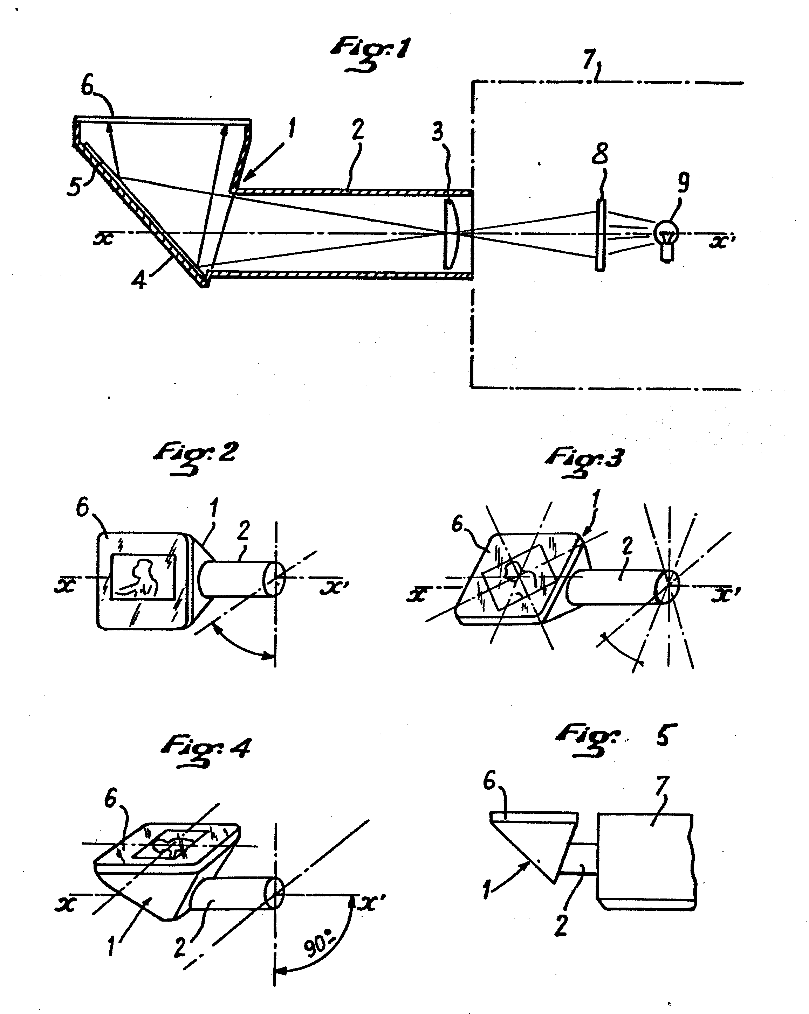

- La visionneuse représentée sur la figure 1 comprend un corps en matière plastique moulée 1 qui présente une partie tubulaire horizontale 2 à l'extrémité ouverte duquel est montée, à l'intérieur du tube, une lentille 3. Le corps 1 présente une face plane 4 qui est inclinée par rapport à l'axe longitudinal xx' du tube 2 et qui porte à l'intérieur d'un miroir 5. Le corps 1 présente également à sa partie supérieure, c'est-à-dire au-dessus du miroir 5, un orifice à travers duquel s'étend un écran de visualisation 6.

La visionneuse suivant l'invention est destinée à être placée devant la sortie d'un projecteur de diapositives désigné dans son ensemble par 7 et représenté uniquement en traits mixtes sur la figure 1. Cette visionneuse peut-être montée sur le projecteur 7, à la place de l'objectif lui-même, par tous moyens appropriés, ou bien encore elle peut être placée à une certaine distance du projecteur, en étant à cet effet portée par un support approprié.

Lorsque la visionneuse 1 suivant l'invention est adaptée au projecteur 7, toute diapositive 8 éclairée par la lampe 9 du projecteur est projetée sur l'écran 6,comme on peut le voir sur les figures 2 à 4. On voit également sur ces figures que si l'on fait tourner l'ensemble de la visionneuse autour de l'axe optique xx'qui est l'axe longitudinal du tube 2 d'entrée du faisceau lumineux,l'image projetée sur l'écran 6 se déplace vers la droite ou vers la gauche, sans présenter de déformation, ce qui permet ainsi de choisir l'angle de vision désiré. D'après les figures 2 à 4 on voit que les images obtenues,lorsque l'écran 6 est vertical (fig.2) et horizontal (fig.4), sont perpendiculaires l'une à l'autre dans le plan de l'écran 6.

La figure 5 illustre le montage de la visionneuse 1 à l'avant d'un projecteur 7, à la place de l'objectif de - celui-ci.

L'écran 6 peut avoir toute forme géométrique appropriée, notamment carrée comme il est représenté sur le dessin.

## REVENDICATIONS

1- Visionneuse pour diapositives caractérisée en ce qu'elle comprend un ensemble monobloc (1) destiné à être monté devant l'emplacement de l'objectif d'un projecteur de diapositives (7) ou à cet emplacement même, dans l'axe optique (xx') du projecteur, cet ensemble comprenant un tube(2) d'entrée du faisceau lumineux dans lequel est logée, à proximité de l'orifice d'entrée du faisceau, une lentille (3) , un miroir (5) incliné par rapport à l'axe (xx') du tube (2) d'entrée du faisceau lumineux et un écran (6) disposé latéralement et recevant le faisceau lumineux dévié par le miroir (5) , pour permettre l'observation sur cet écran d'une diapositive (8) placée dans le projecteur (7) et éclairée par la lampe (9) de celui-ci.

2- Visionneuse suivant la revendication 1 caractérisée en ce qu'elle comporte un corps (1) en matière plastique moulée monté à rotation , par sa partie tubulaire (2), autour de l'axe (xx') du système optique du projecteur (7).

Fig. 1

Fig. 2

Fig. 3

Fig. 4

Fig. 5